# EUROPEAN PATENT SPECIFICATION

(11) **EP 2 908 940 B1**
(45) Date of publication and mention of the grant of the patent: **23.11.2016**
(21) Application number: 13788702.2
(22) Date of filing: 22.10.2013
(51) Int. Cl.: B01J 19/00, C40B 50/14

(54) **METHOD OF IN SITU SYNTHESIZING MICROARRAYS**
VERFAHREN ZUR IN-SITU-SYNTHETISIERUNG VON MIKROARRAYS
PROCÉDÉ DE SYNTHÈSE IN SITU DE MICRORÉSEAUX

(30) Priority: 22.10.2012 EP 12189396
(43) Date of publication of application: 26.08.2015
(73) Proprietor: Universität Wien, 1010 Wien (AT)
(72) Inventor: SOMOZA, Mark, A-3400 Weidling (AT); SOMOZA, Veronika, A-3400 Weidling (AT)
(74) Representative: Sonn & Partner Patentanwälte
(86) International application number: PCT/EP2013/072070
(87) International publication number: WO 2014/064104

(56) References cited:
- WO-A1-92/10092
- WO-A1-99/42813
- US-A1- 2006 229 824
- US-A1- 2007 037 274
- US-B2- 7 956 011

## Description

The invention relates to the generation of molecular microarrays, such as DNA microarrays or peptide microarrays.

Microarrays have become established as practical high-throughput experimental tools in multiple fields of biology. Most microarrays are DNA microarrays, but microarrays for other biological macromolecules, such as RNA, proteins and carbohydrates, exist. One of the most successful and practical synthesis methods for the fabrication of microarrays at both commercial and laboratory scale is in situ, light-directed synthesis. The basic technology is inspired by the photolithographic process that is used to make silicon microchips. The monomer building blocks of the biological macromolecules to be included on the microarray are synthesized with a light-sensitive group, which drops off when illuminated, leaving a reactive site to which the next monomer can couple. By combining coupling chemistry and light exposure, very complex microarrays can be synthesized. Microarrays are currently available with up to 2.1 million different DNA sequences per array. The same technology has been applied to the synthesis of proteins, RNA, and carbohydrate microarrays, but DNA microarrays represent the commercially dominant form and are widely used.

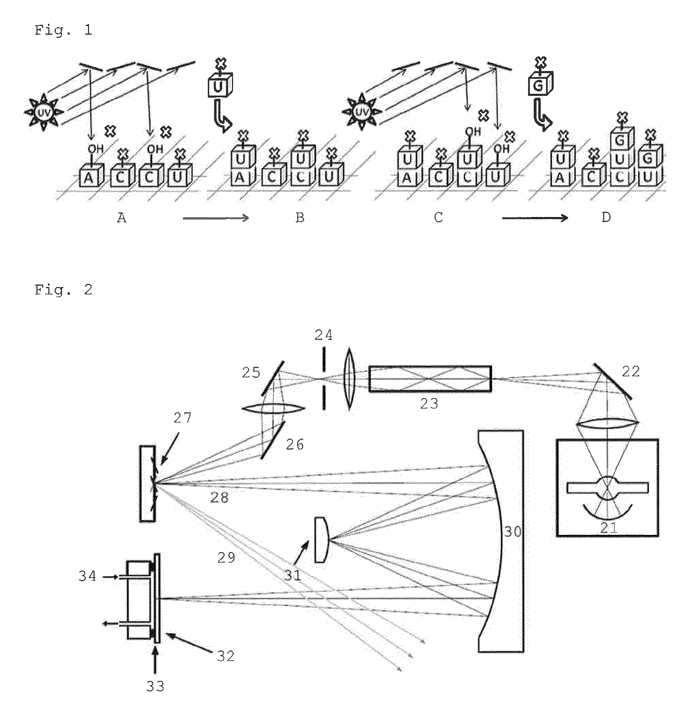

There are currently four dominant forms of light-directed synthesis. (1) The original invention by Affymetrix relies on the use of the MeNPOC light-sensitive group on the 5-hydroxyl group of DNA phosphoramidites. The microarrays are synthesized on glass substrates, which are covered with metal masks, similar to photolithographic masks. Holes in the masks allow light to reach predetermined areas of the glass substrate, where the chemical reactions occur leading to DNA synthesis. A method for in situ synthesis of probes of a microarray using a mask set is disclosed in US 7,844,940 B2. (2) In a refined method the metal masks were replaced by an optical system incorporating an array of micromirrors. In addition to changing the method to deliver light, the chemistry was improved by using the NPPOC light-sensitive group, which photochemical and photophysical characteristics enable more efficient synthesis. The micromirrors can be tilted to direct light to the synthesis surface. Maskless optical micromirror-based microarray synthesis is described in US 8,030,477 B2 and in WO 99/63385 A1. Fig. 1 illustrates a micromirror imaging and synthesis method and Fig. 2 shows a micromirror imaging device for reference. (3) An alternative to physical masks and mirror arrays is the use of a laser system to direct light to the appropriate part of the synthesis surface. (4) The fourth method uses a distinctly different synthesis chemistry: light is used to generate an acidic environment via the use of photo-acids, and the photo-acids cleave acid-labile 5'-hydroxyl groups from the appropriate DNA phosphoramidites.

Further improvements have been made to improve synthesis quality. US 2007/0037274 A1 provides an improved optical system to generate microarrays comprising a flow cell with optimized materials and fluids with similar refractive indices to reduce undesired reflections.

US 2006/229824 A1 relates to sets of probes with differences in single nucleotides. Also disclosed is the manufacture of a microarray gel, which is sliced to provide copies of the microarray.

WO 92/10092 A1 discloses a standard microarray faction method using a mask.

US 7 956 011 B2 describes the parallel synthesis of a multiplicity of microarrays.

WO 99/42813 A1 relates to a patterning device using a micromirror system.

A review on microarray synthesis apparatuses, materials and methods is provided in Agbavwe et al., Journal of Nanobiotechnology, 9:57, 2011.

Although microarray synthesis has been optimized since the first conception, it remains an expensive process, which limits the potential practical applications of microarray technology It is therefore a goal of the present invention to provide a convenient and economical process for synthesizing microarrays to reduce costs per created microarray.

This goal has been solved by the present invention, which provides a method and means, in particular a flow cell, that allows the parallel synthesis of more than one microarray simultaneously with little modifications in the synthesis apparatus.

The invention provides a method of step-wise synthesizing copies of polymers of potentially different units on at least two solid carrier surfaces simultaneously in a preselected pattern, comprising
i) providing a layered synthesis arrangement comprising a transparent first solid carrier and a second solid carrier, wherein said first and second carrier each contain a surface to which polymer units can be applied depending on reactions of photosensitive moieties,
ii) projecting light in a preselected pattern onto the first carrier surface, whereby photons react with the photosensitive moieties thereby activating the first surface, wherein the light substantially passes through the transparent first solid carrier and further projects onto the second carrier surface, whereby photons react with the photosensitive moieties thereby activating the second surface,
iii) applying a fluid comprising a polymer unit to the first and second active (or "activated") surfaces and binding the polymer unit to the exposed sites of said pattern, wherein the fluid is passed through a single channel or gap between the layers of the carrier surfaces, wherein said first and second surfaces face said channel or gap on opposing sides,
iv) repeating steps ii) and iii) with optionally different patterns and/or polymer units, thereby synthesising polymers on said carrier surfaces.

In a related aspect, the invention provides a flow cell for synthesizing copies of polymers of potentially different units on at least two solid carrier surfaces simultaneously in a preselected pattern, comprising
a layer of a transparent first solid carrier,
a layer of a second solid carrier,
wherein said first and second carrier each contain an active surface that contains reactive chemical groups protected with a photosensitive moiety or chemically-labile moiety which can be removed by action of light on a photosensitive compound,
a fluid gap in contact with said first and second active surface,
wherein said gap contains a fluid inlet and a fluid outlet.

Further provided is a kit comprising the flow cell and a container comprising polymer units, preferably modified by a photosensitive moiety.

The present invention is further defined as in the claims. Preferred embodiments of the present invention are further described herein in the following and relate to the inventive method and flow cell and kit equally, wherein the flow cell or kit can be suitable for performing said method steps, e.g. being adapted for the method steps or by comprising means to perform said method steps. The flow cell or kit can be used in the course of the inventive methods. Each of the preferred features or embodiments can be combined with each other in especially preferred embodiments except in cases of exclusive alternatives.

The term "microarray" is used in the art as either an arrangement or as a solid substrate. Both expressions apply to the present invention, which provides a solid surface with such an arrangement. Usually herein "microarray" refers to the solid surface with a pattern of multiple immobilized polymer molecules thereon. The carrier surface is also referred to a substrate herein.

The innovation is to modify the flow cell to synthesize multiple microarrays, especially two microarrays, simultaneously. Surprisingly is has been found that focal depth of focused light is sufficient to illuminate more than one parallel surface and it is still possible to provide suitable fluidic systems that can provide fluid flow onto the active surfaces in a gap or channel with a width sufficiently within an adequate focal depth range. This modification is possible because very little light is absorbed and lost in the synthesis process. Several layers of support carriers (e.g. 2, 3, 4 or more) can be stacked and illuminated by the same light beam. Stacking can be performed in any order.

A further requisite to light illumination is contacting with the fluids comprising the synthesizing units that shall be attached to the surfaces. In principle it is possible to contact each layer sequentially or in parallel, with the same fluid or different fluids. Since only a small quantity of the units in a fluid are adsorbed to the surfaces in the binding reaction, the fluid can pass various surfaces sequentially, e.g. through several flow channels. Of course, the larger the total channel volume, the greater the amount of required chemicals will be. Therefore is also a goal to minimize the gap or channel distance. When using thinner gaps or channels, problems with the fluidics system may arise. Usually the fluid inlet for the fluids, e.g. a tube port, is wider in diameter than the gap distance. If the fluid inlet is within the gap, e.g. in the seal or gasket of the gap, flow turbulences may occur due to changing fluid flow rates dependent on the narrowing to the gap dimension (in comparison to the wider tube). Therefore in a preferred embodiment an opening for a fluid inlet and/or outlet of the fluid for contacting the first and second surface is within one of the carriers itself. E.g. the first and/or second carrier may contain holes with openings for the fluid inlet and/or outlet. The holes in the support can be in any size and can be made to fit the tubes. The inlet and/or outlet may have a diameter of 250 µm to 6 mm, preferably of 500 µm to 4 mm, of 800 µm to 3 mm or of 1 mm to 2 mm.

It is preferred to use a single channel in order to minimize reagent loss and requirement. Thus, in step iii) the fluid is passed through a single channel or gap between the layers of the carrier surfaces, wherein said first and second surfaces face said channel or gap on opposing sides. It is e.g. possible to use the top and the bottom wall of the fluid channel as surfaces for synthesis. If a second synthesis surface is as the backside of the synthesis flow cell, the same array is synthesized on both substrates, the only difference between the two arrays is that they are mirror images of each other. The mirror image layout of the second array does not limit its use in any way. After hybridization (or other applications of the microarray) and scanning the microarrays with a microarray scanner, the images can be rotated and flipped in an image editor (e.g. Photoshop) to have the same orientation. Because the two arrays are synthesized simultaneously with the same chemical reagents and light exposure, they are as similar as two microarrays can be, and therefore may have additional utility as matched pairs for experiments that would benefit from very close data comparisons. Thus, in preferred embodiments of the invention the pattern is displayed on the first surface as a mirror image of the pattern as displayed on the second surface. Since the synthesis time, equipment and reagents are shared between the two arrays, the synthesis cost and time of the second array are greatly reduced. Thus, in a further aspect of the invention a set of two microarrays is provided, with each microarray comprising immobilized polymers in a preselected pattern, wherein the patterns of the two microarrays are mirror-images to each other.

The gap or channel in the flow cell is preferably secured by a seal or gasket. Thus, in preferred embodiments of the flow cell, it further comprises a seal or gasket between said first and second layer of carriers, which creates a gap between the carriers. The primary additional cost is the second microarray substrate and a single-use gasket creating the seal between the two microarrays. In preferred embodiments, the fluid inlets and/or outlets are not in the seal or gasket, but in a solid carrier in an area enclosed by the seal.

Because the microarrays are directed optically, the two surfaces where the microarrays are synthesized need to be separated by a gap within or not greatly exceeding the focal depth of the focal plane of the optical system. In addition, the gap between the two surfaces needs to be small in order to minimize the consumption of the solvents and reagents used in the synthesis. Both of these requirements can be met simultaneously by using a gap of limited dimensions. In preferred embodiments the layer distance between the first and second surface layer is at most 2 mm or at most 1.5 mm, preferably at most 1 mm, especially preferred at most 800 µm or at most 500 µm, even more preferred at most 250 µm, most preferred at most 150 µm or at most 100 µm. The layer distance between the first and second surface layer can be at least 20 µm, at least 30 µm, at least 40 µm or at least 50 µm. A preferred range is 30 µm to 150 µm, especially preferred 50 µm to 100 µm, e.g. about 70-80 µm. The precise optimum gap size is determined by the specific characteristics of the system. A smaller gap is preferred due to a lowering of the consumption of the solvents and reagents, as well as decreasing the requirements of depth-of-focus of the optical system. Smaller gaps are more difficult to engineer due to the thinness of the required gasket and the higher pressures necessary to pump solvents and reagents through the narrower gap.

The first carrier is transparent in the meaning that the light used in the inventive method substantially passes through said carrier material to cause photoreactions with the photoreactive moieties or compounds in the vicinity of the first and second carrier surface. A transparent carrier means one that allows passage of light in sufficient amounts in order to cause photoreactions on the second surface or in the fluid to cause a chemical reaction depending on light incidence on the second surface. Transparency can mean that at least 30%, preferably at least 40%, at least 50%, at least 60%, at least 70%, at least 80%, or at least 90% of incident light to pass through. Preferably, also the second carrier is transparent. In addition, it is possible to place the carrier arrangement onto a block, which preferably is also transparent. Transparent materials help to minimize heating by light absorption. In especially preferred embodiments the space between such a block and the closest carrier, e.g. the second carrier, contains an anti-reflective material, e.g. a fluid with a similar refractory index, also referred to as "index-matching fluid", as the transparent material, to minimize light scattering. Such a system is e.g. disclosed in US 2007/0037274 A1. Alternatively or in addition, the space between the block and the second carrier (or other closest carrier) is filled with a light absorbing material, suitable to absorb the light used for activation, e.g. UV absorbers, such as beta carotene, 9-methylanthracene, riboflavin or combinations thereof. Thus in preferred embodiments of the invention an anti-reflective and/or light absorbing material, preferably a fluid, is provided behind the second carrier, with "behind" being a reference to the direction of light (photons) used during activation. The light absorber and anti-reflective material help to minimize back-scattering and allow the reduction of unwanted deprotection or activation in spots that are not to be irradiated. A suitable transparent material for the first and/or second carrier is glass, plastic or any other suitable microarray substrate. Preferably the block is of metal or glass, especially preferably the block is chemically resistant and transparent in the near ultraviolet and visible wavelengths, such as glass, quartz, fused silica or sapphire. Further materials for the carriers and/or block are disclosed in US 6,329,143, US 6,310,189; US 6,309,831; US 6,197,506; and US 5,744,305. For instance, the carriers may be a polymerized Langmuir Blodgett film, functionalized glass, Si, Ge, GaAs, GaP, SiO₂, SiN₄, modified silicon, or any one of a wide variety of gels or polymers such as (poly)tetrafluoroethylene, (poly)vinylidenedifluoride, polystyrene, polycarbonate, or combinations thereof. Other carrier materials will be readily apparent to those of skill in the art upon review of this disclosure. In a preferred embodiment the substrate is flat glass or single-crystal silicon. The carrier surface is preferably flat, especially at the level of 1 µm, especially preferred of 100 nm, 10 nm or 1 nm.

Without an index-matching and absorbing fluid, the best possibility to reduce reflected light is to use an antireflective coating on the back side of the transparent block. These coatings usually reduce the reflection from about 4% to about 1% of the incident light. This one percent light reflected back is currently the largest source of error in light-directed synthesis of microarrays. Preferably an absorbing fluid is provided between the block and the closest carrier, e.g. the second carrier. An absorbing fluid can reduce the reflected light to approximately zero.

Preferably the light pattern used for activating the surfaces is generated by an array of selectively tiltable micromirrors reflecting light in the preselected pattern dependent on the tilt of each mirror. A micromirror system is disclosed in Agbavwe et al (supra) and in US 8,030,477 B2 and in WO 99/63385 A1 and can be used according to the invention. Lenses or curved mirrors can be positioned between the light source and the micromirror, which can be a micromirror array, or between the micromirror and the substrate.

It is further possible to generate said pattern by a mask comprising holes according to the preselected pattern. A system using light masks is disclosed in US 7,844,940 B2 which can be used according to the invention. A mask can be a solid mask, which a can be used in an array of masks to create different patterns or a alternatively, the mask can have fields than can be switched between transparent and blocking modes, such as an array of liquid crystals as are commonly used in LCDs.

It is further possible to generate said pattern with a laser as disclosed in US 2005/0079601 A1. The laser can be used to sequentially illuminate spots of the pattern. Alternatively it is possible to use an array of lasers, wherein by activating and inactivating certain lasers creates the pattern. Furthermore it is possible to use an array of light emitting diodes similarly to an array of lasers.

The pattern is preferably a 2D pattern. Spots can be arranged in rows and columns in a preselected way, wherein each spot has bound a potentially different polymer as is synthesized according to the present invention.

The pattern may comprise or consist of spots. A single or each spot displayed onto the first and/or second surface may have a size of 5 µm to 3 mm, preferably of 10 µm to 2 mm, 15 µm to 1 mm, 25 µm to 800 µm, 40 µm to 600 µm, 50 µm to 400 µm or 60 µm to 200 µm.

The projected light can be light of multiple wave-lengths, e.g. light of a lamp, or monochromatic light, e.g. of a laser or light emitting diode. The light can be visible light or ultraviolet light, i.e. in the wavelength ranges of 200 nm to 400 nm or 400 nm to 800 nm or a combination thereof, i.e. of 200 nm to 800 nm. Further preferred wavelength ranges are from 200 nm to 300 nm, 300 nm to 400 nm, 400 nm to 500 nm, 500 nm to 600 nm, 600 nm to 700 nm or 700 nm to 800 nm or combinations thereof, especially preferred is the combination of 300 nm to 500 nm. Suitable lamps or other light sources can be selected by a skilled artisan, depending on the reactivity of the photosensitive moiety used. An example lamp is a Hg lamp. In preferred embodiments, the light is within or encompasses the wavelength range of 350 nm to 450 nm. Preferably the light has a bandwidth of 50 nm to 600 nm, preferably of 80 nm to 400 nm or 100 nm to 200 nm within the above mentioned wavelength ranges. It is also possible to use light with narrower bandwidths, such as lasers or light emitting diodes. E.g. the bandwidth can be from 1 nm to 50 nm, preferably 5 nm to 40 nm or 10 nm to 30 nm.

Preferably the light can be focused. To this end a light guide, e.g. a mirror or set of mirrors, or lenses can be used. Preferably the inventive method comprises focusing the light with a focus point between said first and second carrier surface. Preferably the focal point is in the middle third of the distance between the first and second surface. The light guide of the flow cell is preferably suitable for such focusing. Alternatively, spatially coherent light such as a laser light can be used.

The flow cell may e.g. comprise a light guide for projecting light though said first solid carrier onto the second solid carrier, preferably focusing the light with a focus point between said first and second carrier surface.

The light can catalyze a chemical reaction on the surfaces, e.g. an amino acid addition reaction or the addition, removal or crosslinking of organic or inorganic molecules or compounds, small or large. For example, during the addition of a nucleic or an amino acid residue, the light can deprotect the units comprising photosensitive moieties as protecting groups, e.g. phosphoramidite containing compounds. Therefore, in a preferred embodiment, the units as used in the inventive method or as provided in the kit can comprise photosensitive moieties preventing a binding reaction of further units to said units until exposed to said projected light. According to the embodiment step ii) can also be defined as projecting light in a preselected pattern onto the first carrier surface, thereby activating photosensitive moieties on the first surface, wherein the light passes through the transparent first solid carrier, and further projects onto the second carrier surface, thereby activating photosensitive moieties on the second surface. However the photosensitive moieties are not required to be bound to the surface. They can be provided in a fluid, not bound to the unit or surface. Unbound photosensitive moieties are in the following referred to as photosensitive compound. Alternatively, it is also possible to use or provide units comprising or chemically-labile groups preventing a binding reaction of further units until removed by an activated photosensitive compound. Suitable pairs of labile moieties and photosensitive compounds, which do not need to be bound to the units or the surface, exist in the art. An example is an acid sensitive group on the units as labile moiety and a photoacid as photosensitive compound, which reacts with a photon and creates an acid microenvironment upon radiation in the vicinity of the radiation, and in turn near a spot on a microarray that comprises the bound labile unit, which in turn becomes reactive to bind a further unit.

Suitable polymer units may comprise a nucleoside for synthesis of nucleic acid polymers or amino acids for synthesis of polypeptides. Polymer units may be naturally-occurring molecules or synthetic derivatives thereof. The units as used herein may refer to monomer units or preconnected conjugated monomers, e.g. dimers, trimmers, etc. Possible units are nucleosides, nucleotides or conjugated nucleic acids, including 1-mer, 2-mer, 3-mer, 4-mer, 5-mer, 6-mer or longer preprepared chains. Units can also be single amino acids, or dipeptides, tripeptides, etc. that are bond to the surface in this state. Nucleotide units can be selected from A, G, T, C, or U, and derivatives thereof, such as methylated C. Nucleotides are preferably DNA, RNA or LNA. Amino acids can be selected from Ala, Arg, Asn, Asp, Cys, Glu, Gln, Gly, His, Ile, Leu, Lys, Met, Phe, Pro, Ser, Thr, Trp, Tyr, Val or any combination thereof, and derivatives thereof such as selenocysteine. Methods for protein microarray synthesis are e.g. detailed in WO 2012/126788 A1.

The incentive method steps of sequentially ligating or binding units to the surface is preferably repeated until a polymer of the desired length and sequence, optionally on each spot, is created. A polymer can be composed of two or more covalently bonded monomers or units, and its molecular weight may be approximately 1,000 or less. The polymer may include approximately 2 through 500 monomers or units. More specifically, the polymer may include approximately 5 through 30 monomers or units.

Light can also be used for the crosslinking or mono-, bi-, or multi-functional binding groups or compounds to attach molecules such as fluorochromes, antibodies, carbohydrates, lectins, lipids, and the like, to the substrate surface or to molecules previously or concurrently attached to the substrate.

Preferred photosensitive moieties that undergo a chemical reaction upon light exposure are phosphoramidites, such as NPPOC, as used in the art. The preferred light dependent reaction is a deprotection of a chemical moiety on the unit that can then be conjugated with a further unit.

The last step in microarray synthesis may be an overall deprotection to remove all remaining protection steps without further adding additional units.

The first step in microarray synthesis may be attaching a first unit onto the carrier surface that contains reactive chemical groups for linkage with the units. Said chemical groups may be protected with a photosensitive moiety or chemically-labile moiety, which can be removed by action of light on a photosensitive compound, which in turn removes the chemically-labile moiety once activated by light, such as photoacids which act on acid sensitive moieties. Chemical groups may be any form of organic linker molecules such as C1-C30 linkers or any one of the above monomers such as nucleic acids or proteins, in particular poly(X)-chains wherein X is a nucleotide selected from A, T, C, G, U, preferably T. The chain may have any length, preferably 1 to 20 nucleotides or other monomers in length.

The invention further relates to a kit comprising the flow cell and a container comprising polymer units. Said polymer units can be any one as defined above, e.g. nucleotides or amino acids. The units are preferably modified by a photosensitive moiety or by chemically-labile moiety. The photosensitive moiety or the chemically-labile moiety can be removed by light to expose reactive sites on the units for further polymer synthesis as described above. In the kit, the units can be provided in dry form or in a fluid, e.g. an aqueous fluid. The kit may comprise different containers for different units, such as nucleotides selected from A, G, T, C, or U, or any amino acid, e.g. selected from Ala, Arg, Asn, Asp, Cys, Glu, Gln, Gly, His, Ile, Leu, Lys, Met, Phe, Pro, Ser, Thr, Trp, Tyr, Val or any combination thereof, or derivatives thereof as described above. The kit preferably comprises 1, 2, 3, 4, 5, 6, 7, 8, 9, 10 or more different units, preferably from the ones listed above.

Microarrays prepared according to the invention can be used as is known in the art. They can be used in nucleotide binding assays, such expression assays, e.g. to determine miRNA or mRNA in a sample, or in peptide recognition assays, e.g. the determine antibodies in a sample. Especially preferred are differential assays. In differential or comparative assays two microarrays are contacted with different samples, e.g. one sample of interest and one control sample. The inventive microarrays are particularly beneficial for use in differential assays especially when using a pair of microarrays that have been generated simultaneously as described herein. Simultaneously generated microarrays are near identical (except for being optionally mirror images), with minimal variance. The use of such a simultaneously generated set of microarrays minimizes background signals and improves comparative assays in sensitivity in detecting differences between the two samples. Preferably the inventive kit or flow cell comprises a set of at least two microarrays, wherein at least two microarrays are mirror images to each other and/or have been generated simultaneously according to the inventive method. Related thereto, a disclosure also provides the final product of the inventive method in a kit, in particular a kit comprising at least two microarrays with immobilized polymers in a preselected pattern, wherein the patterns of at least two microarrays are mirror image of each other and/or wherein the at least two microarrays have been produced simultaneously in the inventive method. This kit with at least two microarrays can be used as describe, especially for differential or comparative assays.

The microarrays may comprise at least 2, 3, 4, 5, 6, 7, 8, 9, 10, 11, 12, 13, 14, 15, 16, 17, 18, 19, 20 or more different polymers. The polymers may be arranged in a 2D pattern comprising, e.g. comprising rows and columns, e.g. a pattern of at least 2x2, at least 3x3 or at least 4x4 spots. Especially in 2D patterns, the mirror-image pattern of one of the at least two microarrays is non-identical with the pattern of the other of the at least two microarrays. In 1D patterns, the mirror-image pattern of one of the at least two microarrays may be identical or non-identical with the pattern of the other of the at least two microarrays. Preferred is a at least a pair of non-identical mirror-imaged microarrays.

The present invention is further described in the figures and following examples, without being limited to these embodiments of the invention.

### Figures:

Fig. 1: Array layout determination in Maskless Array Synthesis as is known in the art. Two simplified cycles, a uracil (U) coupling followed by a guanine (G) coupling illustrate *in situ* synthesis of the microarray. Step A: First, micromirrors corresponding to a desired coupling of uracil to the first and third positions are tilted to reflect UV light onto the chosen positions. The UV light cleaves the photosensitive 5' protecting groups (e.g. NPPOC) from the ends of RNA strands at these positions, exposing terminal hydroxyl groups. Step B: After UV exposure is over, the uracil phosphoramidite is introduced into the reaction flow cell and couples to these hydroxyl groups. Step C: A subsequent coupling of guanine is initiated by directing micromirrors to illuminate the third and fourth microarray positions. Step D: After exposure, the guanine phosphoramidite is introduced and couples, extending the RNA sequences at positions three and four. Oxidation and capping steps are not shown here.
Fig. 2: Schematic of the optical layout for Maskless Array Synthesis (MAS) as is known in the art. UV light from a Mercury lamp 21 is spatially homogenized in a light-pipe in order to evenly illuminate all of the micromirrors of the DMD. The light pattern displayed on the micromirrors is imaged onto the back side of a glass slide via an Offner relay 1:1 projection system consisting of primary and secondary spherical mirrors. A flow cell holds the glass slide at the image plane and directs reagents to the reaction surface where the microarray is synthesized. 21: Hg Lamp; 22: dichroic mirror; 23: light pipe; 24: shutter; 25: folding mirror 1; 26: folding mirror 2; 27: micromirrors; 28: on-ray; 29: off-ray: 30: primary spherical mirror; 31: secondary spherical mirror; 32: glass slide; 33: image plane; 34: fluid from DNA synthesizer;

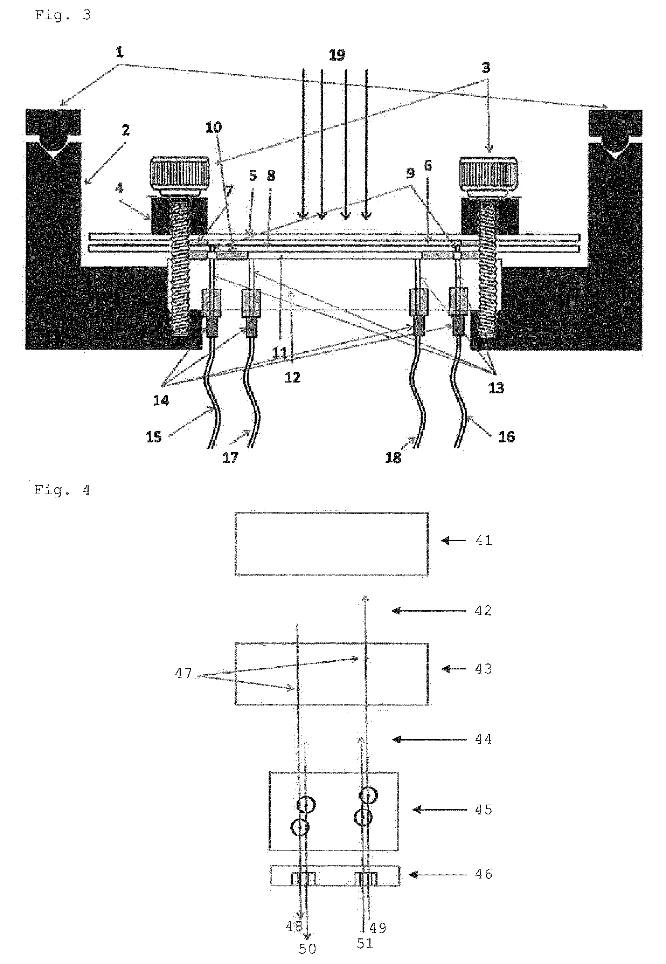

Fig. 3: Cross section schematic of synthesis cell for simultaneous synthesis of mirror image arrays. **1:** Alignment points to optical system. **2:** Metal base used to hold parts together and in alignment with optical system. **3:** Screws used to hold synthesis cell together and attach synthesis cell to the metal base. **4:** Metal frame used to distribute screw pressure. **5:** First microarray substrate. **6:** Chamber between first and second substrates; chamber is where the solvents and reagents flow and the synthesis chemistry takes place. **7:** Gasket between first and second substrates. **8:** Second microarray substrate. **9:** Two holes in second substrate, inlet and outlet for solvents and reagents. **10:** Bottom gasket. **11:** Chamber between second microarray substrate and synthesis block. **12:** Synthesis block. **13:** Hole through synthesis block for introduction of solvents and reagents into synthesis chamber and lower chamber. **14:** Port connections between synthesis block and delivery and waste tubing. **15:** Inlet tubing to reaction chamber. **16:** Outlet tubing from reaction chambers. **17:** Inlet tubing to lower chamber. **18:** Outlet tubing from lower chamber. **19:** Incident light from optical system.
Fig. 4: Assembly of microarray substrates and gaskets onto synthesis block. **41:** first glass substrate; **42:** top gasket; **43:** second glass substrate; **44:** bottom gasket; **45:** bottom block; **46:** side view of bottom block; **47:** two holes in second glass substrate; **48:** top chamber outlet; **49:** top chamber inlet; **50:** bottom chamber outlet; **51:** bottom chamber inlet.

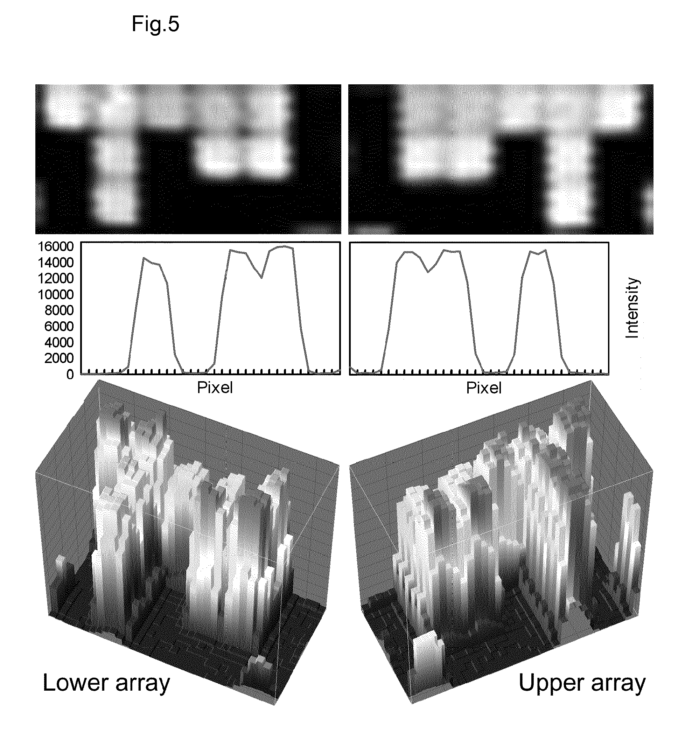

Fig. 5: Scanned images and pixel intensities from two mirror-image microarrays synthesized simultaneously with DNA. Figures on the left are from the lower substrate (closest to synthesis block), and those on the right are from the upper substrate. Top row: detail of microarrays hybridized with Cy5-labeled complementary DNA. Second row: 3x6 array scanned at 2.5 µm. Each features measures 13x13 µm and are separated by a 0.7 µm gap. Third row: Intensity profiles of lines drawn horizontally through the close-ups above. Lower row: 3D surface intensity plots of the same close-ups.

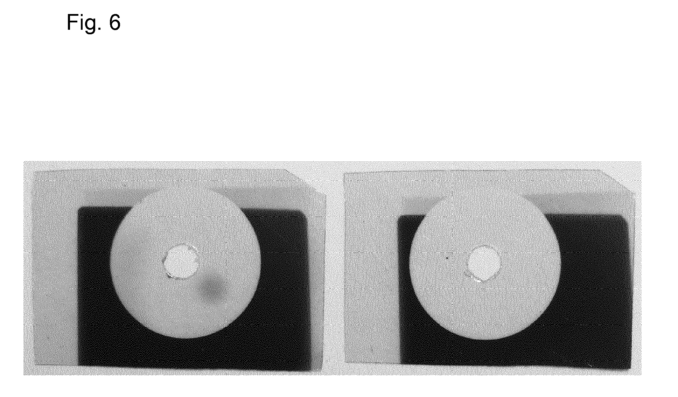

Fig. 6: Visualization of light reflected into the synthesis chamber from the back surface of the quartz block and the complete suppression thereof using a light-absorbing fluid in the lower chamber. A 9.5 mm metal disk with a 1mm diameter pinhole was used to mask radiochromic film in the synthesis chamber. The pinhole was aligned with a 2 mm hole in the film to allow the passage of light (60 J/cm²), and the reaction cell assembly was tilted 7° to direct the reflection away from the hole. With the secondary chamber filled with a non-absorbent fluid (left), there is a clear reflection to the lower right of the hole. When the secondary chamber is filled with a light-absorbing fluid, the reflection is completely suppressed (right).

### Examples:

### Example 1: Outline of synthesis flow cell

A flow cell for microarray synthesis has been manufactured as shown in Fig. 3 and 4. In this system, a gasket between microarray surfaces provided by the first and second substrates, respectively provides the gap for the chemical synthesis fluid. The gasket has been cut (with a laser cutter) from unsintered, skived Teflon tape and has a thickness of ∼80 µm. This material is commonly used in plumbing and is therefore very inexpensive and readily available. At a ±40 µm distance from the optimal focal position, the image formed on each of the two microarray substrates is only slightly out of focus, with features of 1 µm still resolvable with a microscope. Since most microarray scanners have maximum resolutions in the range of 2 to 5 µm, the deviation from optimal focus affects neither the synthesis of the microarray nor the subsequent use of the microarray. The gasket (bottom gasket) between the second microarray substrate and the quartz block, with the two holes as shown in Fig. 4 is made from a perfluoroelastomer (Chemraz) with a thickness of 250 µm and has also been cut with a laser cutting machine. The exact thickness of this gasket is not important, but this thickness is sufficient to make these gaskets strong enough to be reusable.

The fluid inlets and outlets into the chamber between the first and second substrate have a diameter of 1 mm. These inlets and outlets provided as holed drilled into the second substrate. These holes are sufficiently separated from the microarrays so as not interfere with microarray synthesis or use. In preliminary experiments it has been shown that it is not practical to introduce inlet and outlet flows through the gasket material since inlet and outlet openings of sufficiently small diameter to enter the chamber through the narrow gap distance between the microarray substrate cannot transport a sufficient volume of reagents to effectively fill or drain the chamber, nor to provide the necessary homogenous flow of solvents and reagents across the substrate surfaces.

Fig. 3 shows a cross section schematic of a synthesis flow cell for simultaneous synthesis of two mirror-image microarrays.

Fig. 4 shows an exploded view for the synthesis block (item 12 in Fig. 3). This part provides the flat surface onto which the microarray substrates are attached, as well as the fluidics connections for delivery of solvents and reagents. The principle advantage of quartz is that, being transparent, it allows most of the light to exit rather than be absorbed and converted to heat. The transparency also allows for easy optical monitoring of flow in the synthesis cell. Finally, the chamber created between the synthesis block and the second substrate (item 11 in Fig. 3) can be filled with a fluid that matches the index of refraction of a glass microarray substrate and the quartz synthesis block. The index matching fluid (typically DMSO) is introduced into this space via two of the four holes in the block. The index matching fluid prevents reflections at the back surface of the lower microarray substrate, reducing synthesis errors due to stray reflected light. The index matching fluid can also be made to absorb part or all of the light exiting the reaction chamber by dissolving appropriate absorbing molecules in the fluid. These molecules are chosen to absorb between 350 and 450 nm and to either fluoresce at wavelengths greater than 450 nm (where the NPPOC group does not absorb light) or to quench the absorbed light. This additional absorbing step further reduces the possibility of stray light introducing synthesis errors. In certain applications requiring very high accuracy, such as assembly of genes from microarray-synthesized DNA oligonucleotides, the error reduction from reduced stray light is highly beneficial.

For nucleotide synthesis on the substrates reference is made to Fig. 1. Sequentially, light patterned spots were bound with monomers in repeated cycles as is known in the art and summarized in Agbavwe et al. (supra) using the phosphoramidite technology, especially NPPOC as photosensitive protecting group on the 5' position of individual nucleotides. For patterning, a micromirror device as shown in Fig. 2 was used.

### Example 2: Photochemical reaction cell concept and assembly

The reaction cell needs to position the two microarray substrates at the focal plane of the optical system. There is some tolerance to this positioning: the depth of focus of the imaging optics. The imaging optics are a 1:1 Offner relay system, an off-axis conjugate system composed of two spherical concentric mirrors, primary and secondary. The system was designed with a numerical aperture (NA) of 0.08 to result in a resolving power of 2.7 µm. This resolving power is sufficient since it is significantly smaller than the size of individual mirrors of the digital micromirror device (DMD), 13x13 µm, separated by a 0.7 µm gap, and is similar or better than those of most available microarray scanners. A low value of numerical aperture lowers the cost of the primary mirror, but more importantly, reduces the amount of scattered light originating from dust and imperfections in the optical system, which is proportional to NA². Unintended photodeprotection, from scattering, diffraction and local flare, is the largest source of sequence error in light-directed microarray synthesis (Agbavwe et al. 2011, supra). The depth of focus is intrinsically limited by diffraction to <∼ λ/NA², ∼60 µm, but in practice, the positioning of the microarray substrates in the focal plane is somewhat less restricted due to limited resolution of microarray scanners. Therefore, the primary optical constraint in the simultaneous light-directed synthesis of microarray pairs is that the two substrates must be within ∼60-100 µm of each other, depending on the scanner resolution.

A secondary constraint is imposed by reagent delivery. A larger reaction cell volume requires larger flow rates of solvents and reagents, the consumption of which scales with cell volume. Since our original reaction cell (for synthesizing microarrays on a single surface) had a depth of 70 µm and worked well with a standard oligonucleotide synthesizer (Expedite 8909), we took this value as a starting point. Thus, the reaction cell should consist of two standard microarray substrates (75x25x1 mm) separated by a uniform gap of ∼70 µm. The microarray substrates form the entrance and exit windows for the ultraviolet light used in the synthesis. Reagents need to be introduced into this gap and to uniformly flow across the surface before exiting. The reaction cell assembly consists of a black anodized aluminum support block, a quartz block, the two microarray substrates, two gaskets, and a clamping frame and screws to hold the parts together. Reagent delivery tubes attach to the underside of the quartz block and connect to the oligonucleotide synthesizer.

The support block forms the rigid structure for the assembly of the reaction cell and allows for the reaction cell to be precisely positioned in the focal plane. Three alignment points make contact with ball-tipped, high-precision adjustment screws (Newport AJS127-0.5H) in the optical system. After initial adjustment of the screws, the reaction cell assembly can be quickly and reproducibly positioned. The support blocks hold a quartz block. The quartz block has four 0.8 mm through-holes (two inlets, two outlets) that are countersunk on the back side to accommodate microfluidics ports. The microfluidics ports (IDEX 6-32 Coned NanoPort Assemblies) were turned on a lathe to reduce their diameter to 6.4 mm, and attached within each countersunk hole with common cyanoacrylate adhesive. The front and back surfaces of the quartz block were machined to a surface parallelism error of <30 arc sec and polished to an optical flatness of λ/4 (Mindrum Precision). During reaction cell assembly, the lower gasket is placed on the quartz surface. This gasket forms the lower chamber, which can be filled via two of the fluidics ports. Prior to microarray synthesis, this chamber can be filled with an index-matching and light absorbing fluid to prevent light reflections from light exiting the reaction chamber. In the legacy reaction cell design, an antireflective coating on the back surface of the quartz block can reduce the back reflection to a minimum of about 0.25% when new, but this value is typically larger, ∼1%, due to the presence of dust, chemical films and scratches. This 0.25 to 1% value is sufficient to make this unintended light exposure the largest source of error after diffraction, but unlike diffraction, the error is not confined primarily to the gaps between microarray features (Agbavwe et al. 2011, supra). An alternative strategy to reduce back reflections is to fill the lower chamber with an index-matching fluid with dissolved chromophores which absorb the light exiting the reaction chamber, and which either convert the light to heat or Stokes shift it beyond the absorption band of the light-labile group.

The lower gasket has two holes that align with two of holes in the quartz block. These holes couple the corresponding fluidics ports to the microarray synthesis cell. This gasket is made from 250 µm thick Chemraz 584 perfluoroelastomer (FFKM), cut to shape with a laser cutter (Spirit GX). The microarray synthesis cell is a chamber consisting of two glass substrates separated by a very thin gasket. This chamber is accessed via two 1 mm holes, in the lower substrates, which align with the holes in the lower gasket.

The thickness of the upper gasket determines the depth of the photochemical reaction cell and therefore needs to be ∼70 µm thick, chemically resistant and sufficiently elastic to form a seal for the duration of the synthesis, up to ∼12 hours for an array of 70mers. These requirements are quite exceptional and we were unable to find any references to such thin gaskets in the scientific or engineering literature. A perfluoroelastomer, such as Chemraz, would likely work, but the manufacturer is unable to make them thinner than 250 µm. We tried expanded polytetrafluoroethylene (PTFE), which is commonly used in gasket applications due to its chemical resistance and ability to compress to form a seal, but found seepage through the gasket, presumably due to it porous nature. In the end we found that the common PTFE tape used for plumbing applications works well. This tape is made from unsintered PTFE and is therefore sufficiently compressible to form a seal, but not porous. PTFE tape is made in many thicknesses and densities, which allowed for some experimentation. We initially used ∼100 µm (120 µm uncompressed) PTFE with a density of ∼1.4 g/cm³ (Gasoila yellow tape)- sintered PTFE has a density of about 2 g/cm³-but found some loss of focus when microarrays were scanned at a resolution of 2.5 µm. A wider focal range would be required for thicker gaskets. Switching to thinner and lower density PTFE tape (Gasoila Industrial Strength SD, ∼0.7 g/cm³) gave a thickness of ∼50 µm under compression. With this thickness, both of the paired arrays produce sharp scans with resolution limited only by the 2.5 µm pixel size of the scanner, and both reagent and helium flow sweep uniformly across the entire surface of both substrates. The 50 µm PTFE gaskets are also formed with a laser cutter. Because of their thinness, they are too delicate to be reusable, but can be made quickly and inexpensively.

### Example 3: Microarray synthesis and hybridization

Schott Nexterion Glass D slides functionalized with N-(3-triethoxysilylpropyl)-4-hydroxybutryamide (Gelest SIT8189.5). The arrays with holes were drilled with a 0.9 mm diamond bit and washed and rinsed in an ultrasonic bath prior to functionalization. The slides were loaded in a metal staining rack and completely covered with a 500 ml of a solution of 10 g of the silane in 95:5 (v/v) ethanol:water and 1 ml acetic acid. The slides were gently agitated for 4 hours and then rinsed twice for 20 min with gentle agitation in the same solution, but without the silane. The slides were then drained and cured overnight in a preheated vacuum oven (120 °C). After cooling to room temperature, the slides were stored in a desiccator cabinet until use. Microarrays were synthesized directly on the slides using a maskless array synthesizer, which consists of an optical imaging system that used a digital micromirror device to deliver patterned ultraviolet light near 365 nm to the synthesis surface. Microarray layout and oligonucleotide sequences are determined by selective removal of the NPPOC photocleavable 5'-OH protecting group. Reagent delivery and light exposures are synchronized and controlled by a computer. The chemistry is similar to that used in conventional solid-phase oligonucleotide synthesis. The primary modification is the use of NPPOC phosphoramidites. Upon absorption of a photon near 365 nm, and in the presence of a weak organic base, e.g. 1% (m/v) imidazole in DMSO, the NPPOC group comes off, leaving a 5'-terminal hydroxyl which is able to react with an activated phosphoramidite in the next cycle. The DNA sequences on the microarrays in this project were synthesized with a light exposure dose of 4.5 J/cm², with coupling time of 40 s at monomer concentrations of 30 mM. After synthesis, the microarrays were deprotected in 1:1 (v/v) ethylenediamine in ethanol for two hours at room temperature, washed twice with distilled water, dried with argon, and stored in a desiccator until hybridization.

Microarrays were hybridized in adhesive chamber (SecureSeal SA200, Grace Bio-labs) with a solution consisting of 0.3 pmols 5'-Cy5-labeled probe, 40 µg herring sperm DNA and 200 µg acetylated BSA in 400 µL MES buffer (100 mM MES, 1 M NaCl, 20 mM EDTA, 0.01% Tween-20). After 2 hrs of rotation at 42 °C, the chamber was removed and the microarrays were vigorously washed in a 50 ml centrifuge tube with 30 ml non-stringent wash buffer (SSPE; 0.9 M NaCl, 0.06 M phosphate, 6 mM EDTA, 0.01% Tween-20) for 2 min, and then with stringent wash buffer (100 mM MES, 0.1 M NaCl, 0.01% Tween-20) for 1 min. The microarrays were then dipped for a few seconds in final wash buffer (0.1×SSC), and then dried with a microarray centrifuge. Arrays were scanned with a Molecular Devices GenePix 4400A at a resolution of 2.5 µm.

### Example 4: Detection and suppression of reflected light

To test the possibility of eliminating reflected light reaching the synthesis area, a small piece of radiochromic film (Far West Technology, FWT-60-20f), with a 2 mm punched hole, was placed in the reaction cell. A 9.5 mm metal disk with a 1 mm pinhole (Edmund Optics, 39730) was aligned over the hole in the film to serve as a physical mask. The entire reaction cell assembly was tilted by ∼7° to move the reflection spot away from the mask hole. The lower chamber was filled with either DMSO (control) or UV absorbers dissolved in DMSO or dichloromethane. The UV absorbers (beta carotene, 9-methylanthracene and riboflavin) were chosen for high extinction coefficients near 356nm, high Stokes shift, low fluorescence quantum yield and solubility in DMSO. The synthesis cell was exposed using all mirrors, with an exposure of 60 J/cm² (80 mW/cm² for 750 s).

### Example 5: Synthesis of mirror-image microarrays

Simultaneous synthesis of mirror-image microarrays in this microfluidic photochemical reaction chamber produces high-quality microarrays with little additional cost or effort beyond those of the single microarray synthesis of the legacy method. The results of one such experiment is shown in Figure 5. The DMD was made to synthesize an array of DNA 25 mers. The top row in Fig. 5 shows the same detail from scanned images of both the upper and lower microarrays. Although both images appear in focus, at his scale it is not possible to see focus error at the feature level. The second row shows pixel-level close-ups from both of the arrays. Each white square corresponds to a microarray feature synthesized with a single DMD mirror. In both close-ups, the features are individually resolved, and the 0.7 µm gap between features are also clearly visible. The third row shows plots of the scan image intensity along a horizontal line through the center of each of the pixel-level close-ups. The intensity drops by ∼1000 fold between the center of hybridized pixels and unhybridized pixels, which is a typical signal/noise for this type of microarray. The gap between immediately adjacent hybridized pixels is visible as a drop in intensity of about 20%. This interstitial intensity is due to the limited resolution of the scanner (2.5 µm), which leads to image pixels that derive most of their intensity from the adjacent bright microarray features. Diffraction also contributes significantly to intensity in gaps between microarray features, about 40% of the intensity of adjacent features when both features are exposed, and about 20% of the intensity of an adjacent feature when only one of the features is exposed. The vertical sawtooth pattern probably originates from signal latency during rastering by the scanner. The microarrays are fully resolved within the constraints of scanner resolution and diffraction. The fourth row of Figure 5 shows 3-D surface intensity plots of the same close-ups. From the perspective of common microarray use, each of the mirror image microarrays from the pair can be used as an individual microarray, but in some experimental contexts requiring close comparisons, matched pairs can be used to increase confidence in the comparison.

### Example 6: Blocking reflections

The use of a light-absorbing fluid in the lower chamber resulted in the complete blockage of reflected light. Initial trials with 9-methylanthracence and riboflavin in DMSO were only partially successful due to incomplete absorption of violet light from the mercury lamp. Most of the photodeprotection of NPPOC results from the 365 nm line, but the mercury lines at 405 and 436nm are also transmitted through the optical system and result in measureable deprotection. Beta carotene was able to completely absorb the incident light and prevent any reflection. Beta carotene is insufficiently soluble in DMSO, but is highly soluble in dichloromethane, which also has an index of refraction similar to that of glass. The effect of 5.5 mM beta carotene in dichloromethane was tested in comparison to a control experiment with DMSO in the lower chamber. The control showed the reflection from the light transmitted through the 1mm pinhole as a round exposed spot besides the pinhole dependent on the 7° angle selected according to example 4. Another reflection is also apparent on the left side of the circle; this originates from transmission outside the pinhole disk that is not entirely absorbed by the radiochromic film. The film with the absorbing fluid showed that the beta carotene solution completely suppresses the reflections (Fig. 6).

## Claims

1. A method of step-wise synthesizing copies of polymers of potentially different units on at least two solid carrier surfaces simultaneously in a preselected pattern, comprising the steps of
i) providing a layered synthesis arrangement comprising a transparent first solid carrier and a second solid carrier, wherein said first and second carrier each contain a surface to which polymer units can be applied depending on reactions of photosensitive moieties,
ii) projecting light in a preselected pattern onto the first carrier surface, whereby photons react with photosensitive moieties thereby activating the first surface, wherein the light passes through the transparent first solid carrier, and further projects onto the second carrier surface, whereby photons react with photosensitive moieties thereby activating the second surface,
iii) applying a fluid comprising a polymer unit to the first and second activated surfaces and binding the polymer unit to the exposed sites of said pattern, wherein the fluid is passed through a single channel or gap between the layers of the carrier surfaces, wherein said first and second surfaces face said channel or gap on opposing sides,
iv) repeating steps ii) and iii) with optionally different patterns and/or polymer units, thereby synthesising polymers on said carrier surfaces.

2. The method of claim 1, **characterized in that** the pattern is displayed on the first surface as a mirror image of the pattern as displayed on the second surface.

3. The method of claim 1 or 2, **characterized in that** said pattern is generated by an array of selectively tiltable micromirrors reflecting light in the preselected pattern dependent on the tilt of each mirror; or wherein said pattern is generated by a mask comprising holes according to the preselected pattern.

4. The method of any one of claims 1 to 3, **characterized in that** a solid carrier contains an opening for a fluid inlet and/or outlet.

5. The method of any one of claims 1 to 4, **characterized in that** said projected light is light of multiple wave-lengths or monochromatic light.

6. The method of any one of claims 1 to 5, **characterized in that** the layer distance between the first and second surface layer is at most 500 µm, preferably at most 250 µm, more preferred at most 150 µm or at most 100 µm.

7. The method of any one of claims 1 to 6, **characterized in that** the pattern consists of spots, a spot displayed onto the first and/or second surface having a size of 5 µm to 3 mm, preferably of 10 µm to 2 mm, 15 µm to 1 mm, 25 µm to 800 µm, 40 µm to 600 µm, 50 µm to 400 µm or 60 µm to 200 µm.

8. The method of any one of claims 1 to 7, **characterized in that** said units comprise photosensitive moieties preventing a binding reaction of further units to said units until exposed to said projected light or wherein said units comprise labile groups preventing a binding reaction of further units until removed by an activated photosensitive compound, preferably wherein said labile group is an acid sensitive group and wherein said photosensitive compound is a photoacid.

9. The method of any one of claims 1 to 8, **characterized in that** the units comprise nucleoside for synthesis of nucleic acid polymers or amino acids for synthesis of polypeptides.

10. The method of any one of claims 1 to 9, **characterized in that** an anti-reflective and/or light absorbing material, preferably a fluid, is provided behind the second carrier, according to the direction of the photons.

11. A flow cell for synthesizing copies of polymers of potentially different units on at least two solid carrier surfaces simultaneously in a preselected pattern, comprising a layer of a transparent first solid carrier,
a layer of a second solid carrier,
wherein said first and second carrier each contain an active surface that contains reactive chemical groups protected with a photosensitive moiety or chemically-labile moiety which can be removed by action of light on a photosensitive compound,
a fluid gap in contact with said first and second active surface,
wherein said gap contains a fluid inlet and a fluid outlet.

12. The flow cell according to claim 11, further comprising a seal between said first and second layer of carriers.

13. The flow cell according to claim 11 or 12, further comprising a light guide for projecting light though said first solid carrier onto the second solid carrier, preferably focusing the light with a focus point between said first and second carrier surface.

14. The flow cell according to any one of claims 11 to 13 further comprising an anti-reflective and/or light absorbing material, preferably a fluid, behind the second carrier.

15. A kit comprising a flow cell according to any one of claims 11 to 14 and a container comprising polymer units, preferably modified by a photosensitive or chemically-labile moiety.

## Patentansprüche

1. Verfahren zum schrittweisen Synthetisieren von Kopien von Polymeren potenziell verschiedener Einheiten auf wenigstens zwei festen Trägeroberflächen gleichzeitig in einem vorgewählten Muster, das die folgenden Schritte beinhaltet:
i) Bereitstellen einer Syntheseschichtanordnung, die einen transparenten ersten festen Träger und einen zweiten festen Träger aufweist, wobei der erste und der zweite Träger jeweils eine Oberfläche haben, auf der in Abhängigkeit von Reaktionen lichtempfindlicher Teile Polymereinheiten appliziert werden können,
ii) Projizieren von Licht in einem vorgewählten Muster auf die erste Trägeroberfläche, wodurch Photonen mit lichtempfindlichen Teilen reagieren und dadurch die erste Oberfläche aktivieren, wobei das Licht durch den transparenten ersten festen Träger hindurchgeht und weiter auf die zweite Trägeroberfläche projiziert wird, wodurch Photonen mit lichtempfindlichen Teilen reagieren und dadurch die zweite Oberfläche aktivieren,
iii) Applizieren eines Fluids, das eine Polymereinheit aufweist, auf die erste und zweite aktivierte Oberfläche und Binden der Polymereinheit an die freiliegenden Stellen des Musters, wobei das Fluid durch einen einzigen Kanal oder Zwischenraum zwischen den Schichten der Trägeroberflächen hindurchgeleitet wird, wobei die erste und die zweite Oberfläche dem Kanal oder Zwischenraum auf gegenüberliegenden Seiten zugewandt sind,
iv) Wiederholen der Schritte ii) und iii) mit optional verschiedenen Mustern und/oder Polymereinheiten, wodurch Polymere auf den Trägeroberflächen synthetisiert werden.

2. Verfahren nach Anspruch 1, **dadurch gekennzeichnet, dass** das Muster auf der ersten Oberfläche als Spiegelbild des Musters gezeigt wird, das an der zweiten Oberfläche gezeigt wird.

3. Verfahren nach Anspruch 1 oder 2, **dadurch gekennzeichnet, dass** das Muster durch eine Anordnung selektiv kippbarer Mikrospiegel erzeugt wird, die Licht in dem vorgewählten Muster in Abhängigkeit von der Neigung jedes Spiegels reflektieren, oder wobei das Muster durch eine Maske erzeugt wird, die Löcher gemäß dem vorgewählten Muster aufweist.

4. Verfahren nach einem der Ansprüche 1 bis 3, **dadurch gekennzeichnet, dass** ein fester Träger eine Öffnung für einen Fluideinlass und/oder -auslass enthält.

5. Verfahren nach einem der Ansprüche 1 bis 4, **dadurch gekennzeichnet, dass** das projizierte Licht Licht mehrerer Wellenlängen oder monochromatisches Licht ist.

6. Verfahren nach einem der Ansprüche 1 bis 5, **dadurch gekennzeichnet, dass** der Schichtabstand zwischen der ersten und der zweiten Oberflächenschicht höchstens 500 µm beträgt, vorzugsweise höchstens 250 µm, noch bevorzugter höchstens 150 µm oder höchstens 100 µm.

7. Verfahren nach einem der Ansprüche 1 bis 6, **dadurch gekennzeichnet, dass** das Muster aus Punkten besteht, wobei ein Punkt, der auf der ersten und/oder zweiten Oberfläche gezeigt wird, eine Größe von 5 µm bis 3 mm hat, bevorzugt von 10 µm bis 2 mm, 15 µm bis 1 mm, 25 µm bis 800 µm, 40 µm bis 600 µm, 50 µm bis 400 µm oder 60 µm bis 200 µm.

8. Verfahren nach einem der Ansprüche 1 bis 7, **dadurch gekennzeichnet, dass** die Einheiten lichtempfindliche Teile aufweisen, die eine Bindungsreaktion weiterer Einheiten an die Einheiten verhindern, bis sie dem projizierten Licht ausgesetzt sind, oder wobei die Einheiten labile Gruppen aufweisen, die eine Bindungsreaktion weiterer Einheiten verhindern, bis sie von einer aktivierten lichtempfindlichen Verbindung entfernt werden, wobei bevorzugt die labile Gruppe eine säureempfindliche Gruppe ist, und wobei die lichtempfindliche Verbindung eine Photosäure ist.

9. Verfahren nach einem der Ansprüche 1 bis 8, **dadurch gekennzeichnet, dass** die Einheiten Nukleosid zur Synthese von Nukleinsäure-Polymeren oder Aminosäuren zur Synthese von Polypeptiden aufweisen.

10. Verfahren nach einem der Ansprüche 1 bis 9, **dadurch gekennzeichnet, dass** ein antireflektierendes und/oder lichtabsorbierendes Material, vorzugsweise ein Fluid, hinter dem zweiten Träger gemäß der Richtung der Photonen vorgesehen ist.

11. Durchflusszelle zum Synthetisieren von Kopien von Polymeren potenziell verschiedener Einheiten auf wenigstens zwei festen Trägeroberflächen gleichzeitig in einem vorgewählten Muster, die aufweist:
eine Schicht eines transparenten ersten festen Trägers,
eine Schicht eines zweiten festen Trägers,
wobei der erste und der zweite Träger jeweils eine aktive Oberfläche haben, die reaktive chemische Gruppen enthält, die mit einem lichtempfindlichen Teil oder einem chemisch labilen Teil, der durch Lichteinwirkung auf einer lichtempfindlichen Verbindung entfernt werden kann, geschützt sind,
einem Fluidzwischenraum, der mit der ersten und der zweiten aktiven Oberfläche in Verbindung steht,
wobei der Zwischenraum einen Fluideinlass und einen Fluidauslass enthält.

12. Durchflusszelle nach Anspruch 11, die des Weiteren eine Dichtung zwischen der ersten und der zweiten Schicht von Trägern aufweist.

13. Durchflusszelle nach Anspruch 11 oder 12, die des Weiteren einen Lichtleiter zum Projizieren von Licht durch den ersten festen Träger auf den zweiten festen Träger aufweist, wobei vorzugsweise das Licht mit einem Schwerpunkt zwischen der ersten und der zweiten Trägeroberfläche fokussiert wird.

14. Durchflusszelle nach einem der Ansprüche 11 bis 13, die des Weiteren ein antireflektierendes und/oder lichtabsorbierendes Material, vorzugsweise ein Fluid, hinter dem zweiten Träger aufweist.

15. Kit, das eine Durchflusszelle gemäß einem der Ansprüche 11 bis 14 und einen Behälter umfasst, der Polymereinheiten enthält, vorzugsweise modifiziert durch einen lichtempfindlichen oder chemisch labilen Teil.

## Revendications

1. Procédé pour synthétiser par étapes des copies de polymères de motifs potentiellement différents sur au moins deux surfaces de support solides simultanément selon un motif présélectionné, comprenant les étapes consistant à
i) disposer d'un agencement de synthèse stratifié comprenant un premier support solide transparent et un deuxième support solide, chacun des premier et deuxième supports contenant une surface sur laquelle des motifs polymères peuvent être appliqués en fonction de réactions de fragments photosensibles,
ii) projeter une lumière selon un motif présélectionné sur la première surface de support, en conséquence de quoi des photons réagissent avec des fragments photosensibles en activant ainsi la première surface, la lumière traversant le premier support solide transparent, et en outre se projetant sur la deuxième surface de support, en conséquence de quoi des photons réagissent avec des fragments photosensibles en activant ainsi la deuxième surface,
iii) appliquer un fluide comprenant un motif polymère sur les première et deuxième surfaces activées et lier le motif polymère aux sites exposés dudit motif, le fluide traversant un seul canal ou espace entre les couches des surfaces de support, lesdites première et deuxième surfaces faisant face audit canal ou espace sur des côtés opposés,
iv) répéter les étapes ii) et iii) avec des motifs et/ou motifs polymères éventuellement différents, en synthétisant ainsi des polymères sur lesdites surfaces de support.

2. Procédé selon la revendication 1, **caractérisé en ce que** le motif est exposé sur la première surface sous la forme d'une image miroir du motif tel qu'exposé sur la deuxième surface.

3. Procédé selon la revendication 1 ou 2, **caractérisé en ce que** ledit motif est généré par un réseau de micro-miroirs sélectivement inclinables reflétant la lumière selon le motif présélectionné en fonction de l'inclinaison de chaque miroir ; ou dans lequel ledit motif est généré par un masque comprenant des trous conformément au motif présélectionné.

4. Procédé selon l'une quelconque des revendications 1 à 3, **caractérisé en ce qu'**un support solide contient une ouverture pour une entrée et/ou une sortie de fluide.

5. Procédé selon l'une quelconque des revendications 1 à 4, **caractérisé en ce que** ladite lumière projetée est une lumière de longueurs d'ondes multiples ou une lumière monochromatique.

6. Procédé selon l'une quelconque des revendications 1 à 5, **caractérisé en ce que** la distance inter-couche entre les première et deuxième couches de surface est d'au plus 500 µm, de préférence d'au plus 250 µm, mieux encore d'au plus 150 µm ou d'au plus 100 µm.

7. Procédé selon l'une quelconque des revendications 1 à 6, **caractérisé en ce que** le motif est constitué de points, un point exposé sur les première et/ou deuxième surfaces ayant une taille de 5 µm à 3 mm, de préférence de 10 µm à 2 mm, de 15 µm à 1 mm, de 25 µm à 800 µm, de 40 µm à 600 µm, de 50 µm à 400 µm ou de 60 µm à 200 µm.

8. Procédé selon l'une quelconque des revendications 1 à 7, **caractérisé en ce que** lesdits motifs comprennent des fragments photosensibles empêchant une réaction de liaison d'autres motifs auxdits motifs jusqu'à ce qu'ils soient exposés à ladite lumière projetée, ou dans lequel lesdits motifs comprennent des groupes labiles empêchant une réaction de liaison d'autres motifs jusqu'à ce qu'ils soient retirés par un composé photosensible activé, de préférence dans lequel ledit groupe labile est un groupe sensible aux acides et dans lequel ledit composé photosensible est un photoacide.

9. Procédé selon l'une quelconque des revendications 1 à 8, **caractérisé en ce que** les motifs comprennent des nucléosides pour la synthèse de polymères d'acides nucléiques ou des acides aminés pour la synthèse de polypeptides.

10. Procédé selon l'une quelconque des revendications 1 à 9, **caractérisé en ce qu'**un matériau antireflet et/ou absorbant la lumière, de préférence un fluide, est disposé sous le deuxième support, en fonction de la direction des photons.

11. Cellule d'écoulement pour synthétiser des copies de polymères de motifs potentiellement différents sur au moins deux surfaces de support solides simultanément selon un motif présélectionné, comprenant
une couche d'un premier support solide transparent,
une couche d'un deuxième support solide,
chacun des premier et deuxième supports contenant une surface active qui contient des groupes chimiques réactifs protégés par un fragment photosensible ou un fragment labile chimiquement qui peut être retiré par l'action d'une lumière sur un composé photosensible,
un espace de fluide en contact avec lesdites première et deuxième surfaces actives, dans laquelle ledit espace contient une entrée de fluide et une sortie de fluide.

12. Cellule d'écoulement selon la revendication 11, comprenant en outre un joint entre lesdites première et deuxième couches de supports.

13. Cellule d'écoulement selon la revendication 11 ou 12, comprenant en outre un guide de lumière pour projeter une lumière à travers ledit premier support solide sur le deuxième support solide, en focalisant de préférence la lumière avec un point focal entre lesdites première et deuxième surfaces de support.

14. Cellule d'écoulement selon l'une quelconque des revendications 11 à 13, comprenant en outre un matériau antireflet et/ou absorbant la lumière, de préférence un fluide, derrière le deuxième support.

15. Kit comprenant une cellule d'écoulement selon l'une quelconque des revendications 11 à 14 et un récipient comprenant des motifs polymères, de préférence modifiés par un fragment photosensible ou labile chimiquement.
